# FASCICULE DE BREVET EUROPEEN

(11) **EP 3 173 300 B1**
(45) Date de publication et mention de la délivrance du brevet: **23.01.2019**
(21) Numéro de dépôt: 16195327.8
(22) Date de dépôt: 24.10.2016
(51) Int. Cl.: B60S 1/16, F16H 57/029, F16H 57/031, F16H 57/039, H02K 5/173, H02K 7/08, F16H 57/12, F16C 19/06, H02K 7/116, H02K 5/10

(54) **PLAQUE DE FERMETURE ET DISPOSITIF DE MOTORISATION D'ENTRAINEMENT D'ESSUIE-GLACE DE VÉHICULE AUTOMOBILE**
ABDECKPLATTE UND MOTORISIERUNGSVORRICHTUNG EINES SCHEIBENWISCHERANTRIEBS EINES FAHRZEUGS
CLOSING PLATE AND WINDSCREEN WIPER DRIVE MOTOR DEVICE FOR A MOTOR VEHICLE

(30) Priorité: 25.11.2015 FR 1561332
(43) Date de publication de la demande: 31.05.2017
(73) Titulaire: Valeo Systèmes d'Essuyage, 78322 Le Mesnil Saint Denis (FR)
(72) Inventeur: SERVIN, Alain, 86190 VILLIERS (FR); COLLINET, Laurent, 86270 La Roche Posay (FR); BEAUCHAMPS, Stéphane, 86180 BRUXEROLLES (FR)
(74) Mandataire: Vincent, Catherine Marie Marguerite

(56) Documents cités:
- WO-A1-2013/159968
- DE-A1- 19 609 973
- DE-A1-102007 058 667
- FR-A1- 2 973 857
- JP-A- H09 327 167

## Description

L'invention concerne une plaque de fermeture pour dispositif de motorisation d'entrainement d'essuie-glace de véhicule automobile. L'invention concerne aussi un dispositif de motorisation d'entrainement d'essuie-glace de véhicule automobile comprenant une plaque de fermeture.

Le moteur d'entraînement d'essuie-glace entraine un arbre qui porte une vis sans fin engrenant une roue dentée entrainant un organe d'embiellage. Ces éléments d'entrainement sont reçus dans un boitier comprenant un socle fermé par une plaque de fermeture, la plaque présentant un fût destiné à traverser la carrosserie du véhicule pour le passage de l'arbre de sortie entrainant le bras-balai d'essuie-glace.

Dans le boitier, l'arbre portant la vis sans fin est supporté par deux paliers, un premier palier recevant une extrémité de l'arbre et un deuxième palier agencé en amont du moteur. Le premier palier comporte une bague insérée dans un logement de bague ménagé dans le socle.

Le logement de bague est traversant. Un orifice accessible depuis l'extérieur du logement permet l'introduction d'un outil de conformation de la bague lors de l'assemblage des éléments d'entrainement du module de motorisation.

Après conformation de la bague, l'orifice extérieur est fermé par une vis de pression qui vient en butée contre l'extrémité de l'arbre supportée par la bague. La vis de pression permet de maintenir l'arbre et de régler au moins de façon sommaire le jeu de l'arbre. Cette vis de pression empêche également de fait toute entrée d'eau à l'intérieur du boitier.

Des développements récents ont montré que l'utilisation d'un roulement au niveau du deuxième palier procure un avantage intéressant.

Cette utilisation rend la vis de pression inutile, l'arbre étant alors suffisamment maintenu serré par le roulement.

On cherche maintenant à s'affranchir du montage de la vis de pression dans le socle puisqu'elle est devenue inutile, sans toutefois laisser un trou à la place qui pourrait constituer une porte d'entrée pour de l'eau provenant notamment de fuites pouvant s'écouler le long du fût de la plaque de fermeture. L'eau pourrait alors s'infiltrer dans le socle, s'y accumuler et stagner, risquant ainsi de détériorer les éléments d'entrainement.

Un but de la présente invention est donc de proposer une plaque de fermeture et un dispositif de motorisation résolvant au moins partiellement les inconvénients de l'art antérieur, qui soient simples à mettre en oeuvre et de moindre coût. L'art antérieur comprend le document WO 2013/159968 A1 qui montre le préambule de la revendication 1. D'autres documents de l'art antérieur, DE 10 2007 058667 A1 et FR 2 973 857 A1 montrent des dispositifs de motorisation d'entrainement d'essuie-glace sans plaque de fermeture apte à résoudre les inconvénients précités.

A cet effet, la présente invention a pour objet un dispositif de motorisation d'entrainement d'essuie-glace de véhicule automobile, comprenant un socle dans lequel est reçu un arbre portant une vis sans fin apte à être entrainée en rotation par un moteur dudit dispositif, le socle comprenant un logement de bague dans lequel est reçu une bague supportant une extrémité de l'arbre portant la vis sans fin, un orifice étant ménagé dans l'extrémité du logement de bague dans l'axe de rotation de l'arbre, le dispositif de motorisation comportant une plaque de fermeture, ledit dispositif de motorisation étant caractérisé en ce que ladite plaque de fermeture comprend une embase fermant ledit socle, la plaque de fermeture comportant une languette de fermeture venue de matière avec l'embase, servant de déflecteur d'eau pour un orifice ménagé dans l'extrémité du logement de bague, dans l'axe de rotation de l'arbre.

La languette de fermeture empêche ainsi à l'orifice du logement de bague de constituer une porte d'entrée pour des gouttelettes d'eau provenant notamment d'écoulements le long du fût de la plaque de fermeture.

La protection de l'orifice par la plaque de fermeture est simple à mettre en oeuvre car réalisée en même temps que la fermeture du socle par positionnement de la plaque de fermeture. On évite ainsi la création et la référence de pièces supplémentaires, comme une vis filetée de fermeture ainsi qu'un usinage du socle, comme un taraudage, ce qui simplifie le procédé d'assemblage et limite les coûts.

Selon une ou plusieurs caractéristiques de la plaque de fermeture, prise seule ou en combinaison :
- la languette de fermeture est adaptée pour fermer l'orifice du logement de bague,
- la languette de fermeture s'étend sensiblement perpendiculairement à l'embase,
- la languette de fermeture présente une surface plane,
- la plaque de fermeture comporte au moins un renfort au moins partiellement porté par la languette de fermeture, venu de matière avec la languette de fermeture,
- le renfort s'étend sur la périphérie de la languette de fermeture,
- le renfort s'étend également sur l'embase,
- la languette de fermeture présente une extrémité arrondie,
- la languette de fermeture présente une forme de « U » plein,
- la plaque de fermeture est obtenue par moulage.

Selon une ou plusieurs caractéristiques du dispositif de motorisation, prise seule ou en combinaison :
- le dispositif de motorisation comprend un roulement pour supporter l'arbre portant la vis sans fin,
- le roulement est agencé dans un logement de roulement du socle destiné à être raccordé à un boitier du moteur.

D'autres avantages et caractéristiques apparaîtront à la lecture de la description d'un exemple non limitatif de réalisation de l'invention, ainsi que sur les figures annexées sur lesquelles :
- la figure 1 montre une vue schématique d'ensemble d'un dispositif de motorisation d'entrainement d'essuie-glace de véhicule automobile,
- la figure 2 montre des éléments du dispositif de motorisation de la figure 1, vue de dessus,
- la figure 3 montre une vue en perspective d'un organe d'embiellage du dispositif de motorisation de la figure 1,
- la figure 4 montre une vue en perspective d'une plaque de fermeture du dispositif de motorisation de la figure 1,
- la figure 5 montre une vue en coupe et de côté du dispositif de motorisation de la figure 1,
- la figure 6 montre une vue de côté d'un socle du dispositif de motorisation de la figure 1, et
- la figure 7 montre une vue partielle du dispositif de motorisation de la figure 1 en éclaté, avec la plaque de fermeture positionnée à l'aplomb du socle.

Sur ces figures, les éléments identiques ou analogues portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

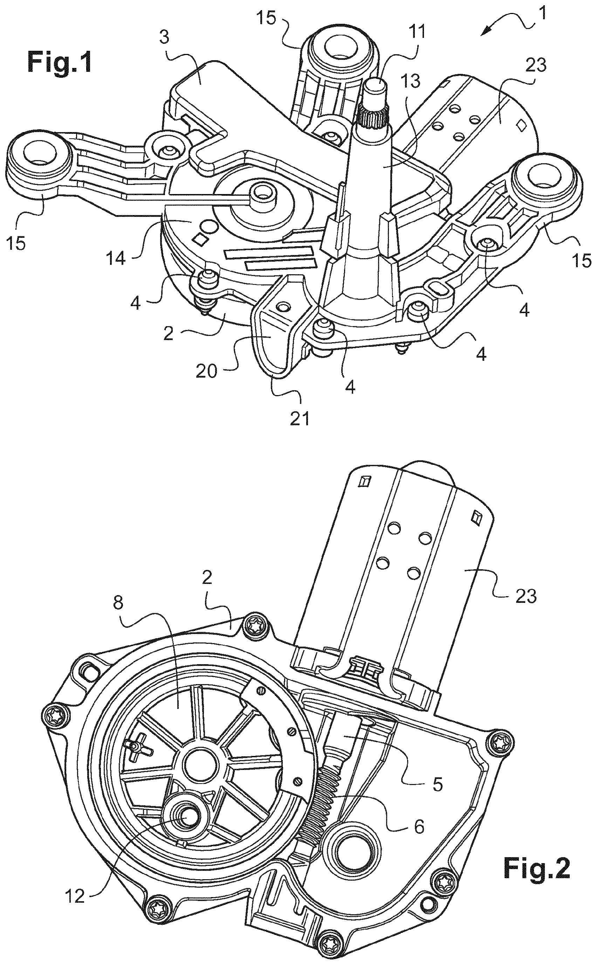

En référence à la figure 1, on a représenté un dispositif de motorisation 1 d'entrainement d'essuie-glace de véhicule automobile, notamment pour essuie-glace de vitre arrière.

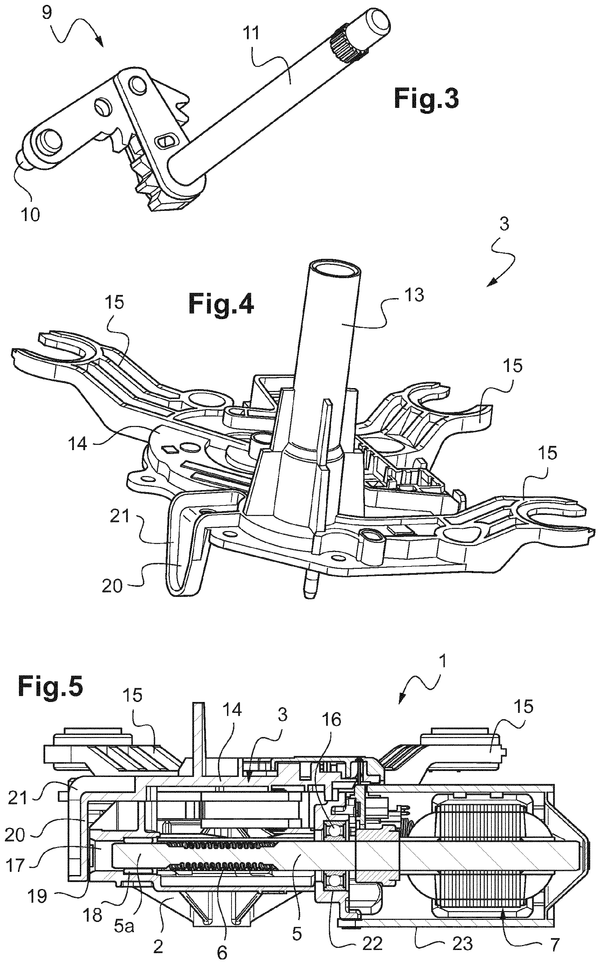

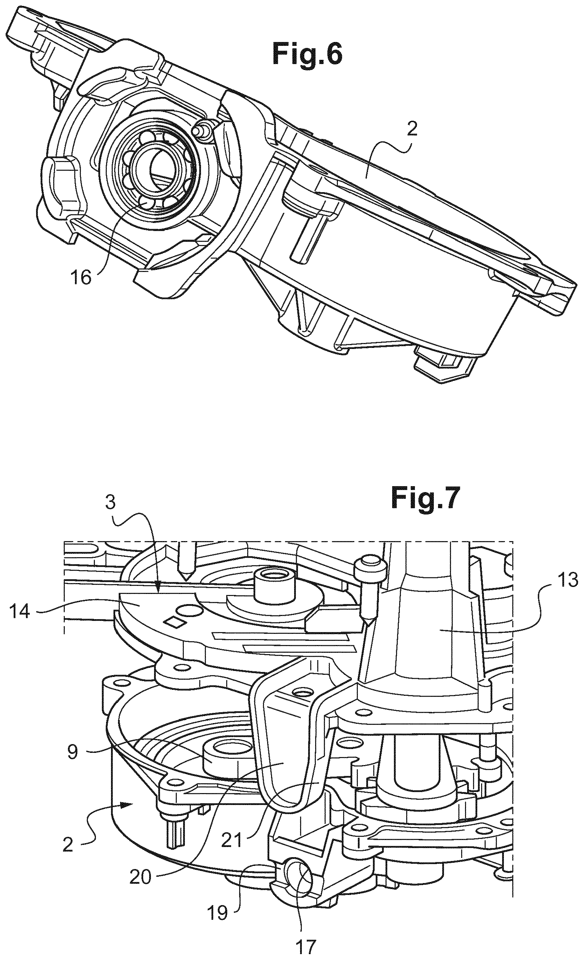

Le dispositif de motorisation 1 comporte un boitier formé d'un socle 2 (figure 6) et d'une plaque de fermeture 3 (figure 4) fermant le socle 2. La plaque de fermeture 3 est fixée au socle 2 par exemple au moyen de vis de fixation 4. Le boitier loge des éléments du dispositif de motorisation 1, notamment un arbre 5, une roue dentée 8 et un organe d'embiellage 9.

Mieux visible sur la figure 2, le socle 2 reçoit l'arbre 5 (ou arbre d'induit) portant une vis sans fin 6. L'arbre 5 fait saillie du rotor d'un moteur 7 électrique protégé par un capot 23. Le socle 2 reçoit également la roue dentée 8 qui engrène la vis sans fin 6, ainsi que l'organe d'embiellage 9 du dispositif de motorisation 1.

L'organe d'embiellage 9 (figure 3) est un système bielle-manivelle présentant un axe d'entrée 10 et un axe de sortie 11, articulés. L'axe d'entrée 10 est monté dans une cavité 12 excentrée de la roue dentée 8 et l'axe de sortie 11 est montée dans un fût 13 faisant saillie d'une embase 14 de la plaque de fermeture 3 (figure 4). Le fût 13 est destiné à traverser la carrosserie du véhicule pour le passage de l'arbre de sortie 11 entrainant le bras-balai d'essuie-glace. Une fois monté dans le véhicule, le fût 13 s'étend verticalement.

L'embase 14 de la plaque de fermeture 3 qui ferme le socle 2 présente une forme générale de plaque. La plaque de fermeture 3 comporte également un dispositif de fixation, tel que des pattes de fixation 15, par exemple trois, reliées à l'embase 14, pour fixer le dispositif de motorisation 1 au véhicule automobile (figure 1).

Comme on peut le voir sur la vue en coupe de la figure 5 et sur la figure 6, le dispositif de motorisation 1 comprend un roulement 16 pour supporter l'arbre 5 portant la vis sans fin 6. Le roulement 16 est par exemple agencé sensiblement au milieu de l'arbre 5, entre le rotor du moteur 7 et la vis sans fin 6. Le roulement 16 peut être agencé dans un logement de roulement 22 du socle 2 destiné à être raccordé au capot 23 du moteur 7. Le roulement 16 est ainsi agencé en sortie du moteur 7.

Un logement de bague 17 est en outre ménagé dans le socle 2 pour recevoir une extrémité de l'arbre 5 portant la vis sans fin 6. Le logement de bague 17 présente une forme cylindrique, coaxiale à l'axe de rotation de l'arbre 5. Le dispositif de motorisation 1 comporte également une bague 18, cylindrique, reçue dans le logement de bague 17, et supportant l'extrémité 5a de l'arbre 5.

Comme on peut le voir sur les figures 5 et 7, un orifice 19 est ménagé dans l'extrémité axiale du logement de bague 17, du côté extérieur du socle 2, dans l'axe de rotation de l'arbre 5. Le logement de bague 17 est donc traversant. L'orifice 19 permet l'introduction d'un outil de conformation de la bague 18 lors de l'assemblage des éléments du dispositif de motorisation 1.

La plaque de fermeture 3 comporte en outre une languette de fermeture 20 venue de matière avec l'embase 14, servant de déflecteur d'eau pour l'orifice 19 (figures 1, 4, 5, 7). La languette de fermeture 20 empêche ainsi à l'orifice 19 du logement de bague 17 de constituer une porte d'entrée pour des gouttelettes d'eau provenant notamment d'écoulements le long du fût 13 de la plaque de fermeture 3.

La protection de l'orifice 19 par la plaque de fermeture 3 est simple à mettre en oeuvre car réalisée en même temps que la fermeture du socle 2 par positionnement de la plaque de fermeture 3. On évite ainsi la création et la référence de pièces supplémentaires, comme une vis filetée de fermeture ainsi qu'un usinage du socle, comme un taraudage, ce qui simplifie le procédé d'assemblage et limite les coûts.

La languette de fermeture 20 est par exemple adaptée pour fermer l'orifice 19, en le couvrant, obturant ainsi extérieurement l'accès au logement de bague 17. La fermeture de l'orifice 19 du logement de bague 17 par la languette de fermeture 20 renforce la protection du boitier en permettant notamment d'éviter la pénétration d'humidité ou de saletés et améliore aussi son aspect visuel.

Selon un exemple de réalisation, la languette de fermeture 20 s'étend sensiblement perpendiculairement à l'embase 14. La languette de fermeture 20 peut présenter une surface plane de manière à venir plaquer les surfaces planes du socle 2 autour de l'orifice 19. Comme on peut le voir sur la figure 5, l'extrémité 5a de l'arbre 5 n'est pas positionnée en butée contre la languette de fermeture 20. Il subsiste un interstice entre les deux.

La languette de fermeture 20 présente par exemple une extrémité arrondie, par exemple en forme de « U » plein, lui conférant une forme robuste.

En outre, selon un exemple de réalisation, la plaque de fermeture 3 comporte au moins un renfort 21 au moins partiellement porté par la languette de fermeture 20 et venu de matière avec la languette de fermeture 20.

Le renfort 21 présente par exemple une forme de nervure s'étendant perpendiculairement à la surface plane de la languette de fermeture 20.

Le renfort 21 permet de renforcer la tenue mécanique de la languette de fermeture 20, notamment pour éviter qu'elle ne se torde ou se casse avant que la plaque de fermeture 3 ne soit montée sur le socle 2.

Le renfort 21 s'étend par exemple sur la périphérie de la languette de fermeture 20. Dans le cas d'une languette de fermeture 20 présentant une surface plane et une extrémité arrondie en forme de « U » plein, le renfort 21 s'étend ainsi le long de la périphérie arrondie.

Le renfort 21 peut en outre s'étendre sur l'embase 14. Ainsi, dans l'exemple, le renfort 21 se prolonge par deux nervures situées de chaque côté de la languette de fermeture 20 sur l'embase 14 (figure 4).

La plaque de fermeture 3 est par exemple en matériau plastique et est obtenue en une seule pièce par moulage.

## Revendications

1. Dispositif de motorisation (1) d'entrainement d'essuie-glace de véhicule automobile, comprenant un socle (2) dans lequel est reçu un arbre (5) portant une vis sans fin (6) apte à être entrainée en rotation par un moteur (7) dudit dispositif (1), le socle (2) comprenant un logement de bague (17) dans lequel est reçu une bague (18) supportant une extrémité (5a) de l'arbre (5) portant la vis sans fin (6), un orifice (19) étant ménagé dans l'extrémité du logement de bague (17) dans l'axe de rotation de l'arbre (5), ledit dispositif de motorisation (1) comportant une plaque de fermeture (3), ladite plaque (3) comportant une embase (14) fermant ledit socle (2), ledit dispositif de motorisation (1) étant **caractérisé en ce que** la plaque de fermeture (3) comprend une languette de fermeture (20) venue de matière avec l'embase (14), servant de déflecteur d'eau pour un orifice (19) ménagé dans l'extrémité du logement de bague (17), dans l'axe de rotation de l'arbre (5).

2. Dispositif de motorisation (1) selon la revendication précédente, **caractérisée en ce que** la languette de fermeture (20) est adaptée pour fermer l'orifice (19) du logement de bague (17).

3. Dispositif de motorisation (1) selon la revendication précédente, **caractérisée en ce que** la languette de fermeture (20) s'étend sensiblement perpendiculairement à l'embase (14).

4. Dispositif de motorisation (1) selon l'une des revendications précédentes, **caractérisée en ce que** la languette de fermeture (20) présente une surface plane.

5. Dispositif de motorisation (1) selon l'une des revendications précédentes, **caractérisée en ce qu'**elle comporte au moins un renfort (21) au moins partiellement porté par la languette de fermeture (20), venu de matière avec la languette de fermeture (20).

6. Dispositif de motorisation (1) selon la revendication précédente, **caractérisée en ce que** le renfort (21) s'étend sur la périphérie de la languette de fermeture (20).

7. Dispositif de motorisation (1) selon l'une des revendications 5 ou 6, **caractérisée en ce que** le renfort (21) s'étend également sur l'embase (14).

8. Dispositif de motorisation (1) selon l'une des revendications précédentes, **caractérisée en ce que** la languette de fermeture (20) présente une extrémité arrondie.

9. Dispositif de motorisation (1) selon l'une des revendications précédentes, **caractérisée en ce que** la languette de fermeture (20) présente une forme de « U » plein.

10. Dispositif de motorisation (1) selon l'une des revendications précédentes, **caractérisée en ce qu'**elle est obtenue par moulage.

11. Dispositif de motorisation (1) selon l'une quelconque des revendications précédentes, **caractérisé en ce qu'**il comprend un roulement (16) pour supporter l'arbre (5) portant la vis sans fin (6).

12. Dispositif de motorisation (1) selon la revendication précédente, **caractérisé en ce que** le roulement (16) est agencé dans un logement de roulement (22) du socle (2) destiné à être raccordé à un boitier (23) du moteur (7).

## Patentansprüche

1. Motorisierungsvorrichtung (1) eines Scheibenwischerantriebs eines Kraftfahrzeugs, umfassend einen Sockel (2), in dem eine Welle (5) aufgenommen ist, die eine Schnecke (6) trägt, die geeignet ist, in Drehung von einem Motor (7) der Vorrichtung (1) angetrieben zu werden, wobei der Sockel (2) eine Ringaufnahme (17) umfasst, in der ein Ring (18) aufgenommen ist, der ein Ende (5a) der Welle (5) trägt, die die Schnecke (6) trägt, wobei eine Öffnung (19) in dem Ende der Ringaufnahme (17) in der Drehachse der Welle (5) vorgesehen ist, wobei die Motorisierungsvorrichtung (1) eine Verschlussplatte (3) umfasst, wobei die Platte (3) eine Grundplatte (14) umfasst, die den Sockel (2) verschließt, wobei die Motorisierungsvorrichtung (1) **dadurch gekennzeichnet ist, dass** die Verschlussplatte (3) eine Verschlusslasche (20) umfasst, die mit der Grundplatte (14) aus einem Stück ist, die als Wasserabweiser für eine Öffnung (19) dient, die in dem Ende der Ringaufnahme (17) in der Drehachse der Welle (5) vorgesehen ist.

2. Motorisierungsvorrichtung (1) nach dem vorhergehenden Anspruch, **dadurch gekennzeichnet, dass** die Verschlusslasche (20) dazu vorgesehen ist, die Öffnung (19) der Ringaufnahme (17) zu verschließen.

3. Motorisierungsvorrichtung (1) nach dem vorhergehenden Anspruch, **dadurch gekennzeichnet, dass** sich die Verschlusslasche (20) im Wesentlichen senkrecht auf die Grundplatte (14) erstreckt.

4. Motorisierungsvorrichtung (1) nach einem der vorhergehenden Ansprüche, **dadurch gekennzeichnet, dass** die Verschlusslasche (20) eine ebene Oberfläche aufweist.

5. Motorisierungsvorrichtung (1) nach einem der vorhergehenden Ansprüche, **dadurch gekennzeichnet, dass** sie mindestens eine Verstärkung (21) umfasst, die zumindest teilweise von der Verschlusslasche (20) getragen wird und mit der Verschlusslasche (20) aus einem Stück ist.

6. Motorisierungsvorrichtung (1) nach dem vorhergehenden Anspruch, **dadurch gekennzeichnet, dass** sich die Verstärkung (21) an der Peripherie der Verschlusslasche (20) erstreckt.

7. Motorisierungsvorrichtung (1) nach einem der Ansprüche 5 oder 6, **dadurch gekennzeichnet, dass** sich die Verstärkung (21) auch auf der Grundplatte (14) erstreckt.

8. Motorisierungsvorrichtung (1) nach einem der vorhergehenden Ansprüche, **dadurch gekennzeichnet, dass** die Verschlusslasche (20) ein abgerundetes Ende aufweist.

9. Motorisierungsvorrichtung (1) nach einem der vorhergehenden Ansprüche, **dadurch gekennzeichnet, dass** die Verschlusslasche (20) eine Form eines vollen "U" aufweist.

10. Motorisierungsvorrichtung (1) nach einem der vorhergehenden Ansprüche, **dadurch gekennzeichnet, dass** sie durch Formguss erhalten wird.

11. Motorisierungsvorrichtung (1) nach einem der vorhergehenden Ansprüche, **dadurch gekennzeichnet, dass** sie ein Wälzlager (16) zum Tragen der Welle (5), die die Schnecke (6) trägt, umfasst.

12. Motorisierungsvorrichtung (1) nach dem vorhergehenden Anspruch, **dadurch gekennzeichnet, dass** das Wälzlager (16) in einer Wälzlageraufnahme (22) des Sockels (2) angeordnet ist, die dazu bestimmt ist, an ein Gehäuse (23) des Motors (7) angeschlossen zu werden.

## Claims

1. Windscreen wiper drive motor device (1) for a motor vehicle, comprising a support (2), a shaft (5) being received therein, said shaft bearing an endless screw (6) which is capable of being driven in rotation by a motor (7) of said device (1), the support (2) comprising a bush mounting (17), a bush (18) being received therein, said bush supporting one end (5a) of the shaft (5) bearing the endless screw (6), an orifice (19) being formed in the end of the bush mounting (17) in the axis of rotation of the shaft (5), said motor device (1) comprising a closing plate (3) , said plate (3) comprising a base (14) closing said support (2), said motor device (1) being **characterised in that** the closing plate (3) comprises a closing tongue (20) which is made of the same material as the base (14) and serves as a water deflector for an orifice (19) formed in the end of the bush mounting (17) in the axis of rotation of the shaft (5).

2. Motor device (1) according to the preceding claim, **characterized in that** the closing tongue (20) is capable of closing the orifice (19) of the bush mounting (17).

3. Motor device (1) according to the preceding claim, **characterized in that** the closing tongue (20) extends substantially perpendicular to the base (14) .

4. Motor device (1) according to one of the preceding claims, **characterized in that** the closing tongue (20) has a planar surface.

5. Motor device (1) according to one of the preceding claims, **characterized in that** it comprises at least one reinforcement (21) which is at least partially borne by the closing tongue (20) and which is made from the same material as the closing tongue (20).

6. Motor device (1) according to the preceding claim, **characterized in that** the reinforcement (21) extends over the periphery of the closing tongue (20) .

7. Motor device (1) according to one of claims 5 or 6, **characterized in that** the reinforcement (21) also extends over the base (14).

8. Motor device (1) according to one of the preceding claims, **characterized in that** the closing tongue (20) has a rounded end.

9. Motor device (1) according to one of the preceding claims, **characterized in that** the closing tongue (20) has a filled U-shape.

10. Motor device (1) according to one of the preceding claims, **characterized in that** it is obtained by moulding.

11. Motor device (1) according to one of preceding claims, **characterized in that** it comprises a rolling bearing (16) to support the shaft (5) bearing the endless screw (6).

12. Motor device (1) according to the preceding claim, **characterized in that** the rolling bearing (16) is arranged in the rolling bearing housing (22) of the support (2), designed to be connected to a housing (23) of the motor (7).
